# EUROPEAN PATENT APPLICATION

(11) **EP 2 466 537 A1**
(43) Date of publication of application: **20.06.2012**
(21) Application number: 11150841.2
(22) Date of filing: 13.01.2011
(51) Int. Cl.: G06Q 20/00

(54) **Transaction information keeping methods and mobile devices thereto**

(30) Priority: 07.12.2010 US 962389
(71) Applicant: MediaTek, Inc, Hsin-Chu 300 (TW)
(72) Inventor: Ho, Yu-Ping, Feng-Shan City, Kao-Hsiung Hsien (TW)
(74) Representative: 2K Patentanwälte Blasberg Kewitz & Reichel

(57) **Abstract**

A mobile device (10) for keeping transaction information at payer's side is provided with an information keeping module (210) therein. The information keeping module (210) is suitable for obtaining first transaction information from at least one of a payment device and a point of sale terminal. Particularly, the first transaction information corresponds to a transaction performed between the payment device and the point of sale terminal.

## Description

### BACKGROUND OF THE INVENTION

### FIELD OF THE INVENTION

The invention generally relates to transaction information keeping techniques, and more particularly, to methods and mobile devices for keeping transaction information at payer's side.

### DESCRIPTION OF THE RELATED ART

In addition to cash, various means of payment, such as checks, credit cards, debit cards, smart cards, and bank transfers, are provided to improve convenience of purchases and transactions, since there is no arbitrary limit on the form that a payment can take. Such payments are frequently accompanied by invoices or receipts with different formats, and make keeping track of all payments difficult. Thus, there is a growing trend of using as few means of payment as possible, to simplify keeping track of payments. One commonly adopted mean of payment is the mobile payment. Instead of paying with cash, checks, or credit cards, a consumer can use a mobile device, such as a mobile phone, to pay for wide range of services and digital or hard goods. Specially, the mobile device can be equipped with a smartcard, and all it takes to complete a payment is to wave the mobile device near a Near Field Communication (NFC) reader terminal. Once the NFC reader terminal detects the smartcard in the mobile device, the transaction information may be obtained using NFC technology and the payment may be made accordingly.

However, in personal finances, a user (payer) needs to manually keep track of all invoices and/or receipts of every payment to sort out the account of expense. As tedious and inconvenient as keeping track of payments is, a lot of financial software has been invented which mainly provides well designed table formats and integrated calculation functions to make keeping track of payments easier. For example, financial software may provide an expense table with well defined entries for all possible expenses, such as "breakfast", "lunch", and "dinner" entries for dining expenses, etc. This alleviates the burden of the user (payer) having to input the subsidiary information other than the amount of the cost. Financial software may also provide automatic integration and calculation of payments, such as summing all payments made daily, or summing all payments in the same category. Unfortunately, a user (payer) still has to manually input the information of each payment into the financial software so as to obtain a plain and clear result of all expenses.

### BRIEF SUMMARY OF THE INVENTION

Accordingly, embodiments of the invention provide mobile devices and transaction information keeping methods for keeping transaction information at payer's side. In one aspect of the invention, a mobile device for keeping transaction information at payer's side is provided. The mobile device comprises an information keeping module suitable for obtaining first transaction information from at least one of a payment device and a point of sale terminal, wherein the first transaction information corresponds to a transaction performed between the payment device and the point of sale terminal.

In another aspect of the invention, a mobile device for keeping transaction information at payer's side is provided. The mobile device comprises an information keeping module and an accounting module. The information keeping module obtains first transaction information from a service provider via a wireless module. The accounting module is coupled to the information keeping module, and generates a first expenditure entry for the first transaction information according to a data format of an expense record.

In yet another aspect of the invention, a transaction information keeping method for a mobile device coupled with a payment device to keep transaction information at payer's side is provided. The transaction information keeping method comprises the steps of obtaining first transaction information from at least one of the payment device and a point of sale terminal, wherein the first transaction information corresponds to a transaction performed between the payment device and the point of sale terminal, and storing the first transaction information.

Other aspects and features of the present invention will become apparent to those with ordinarily skill in the art upon review of the following descriptions of specific embodiments of mobile devices and transaction information keeping methods for keeping transaction information at payer's side.

### BRIEF DESCRIPTION OF DRAWINGS

The invention can be more fully understood by reading the subsequent detailed description and examples with references made to the accompanying drawings, wherein:

FIG. 1 is a block diagram of a contactless transaction system according to an embodiment of the invention;

FIG. 2 is a block diagram of a mobile device according to an embodiment of the invention;

FIG. 3 is a flow chart depicting a transaction information keeping method according to an embodiment of the invention;

FIG. 4 is a flow chart depicting a transaction information keeping method according to another embodiment of the invention; and

FIG. 5 is a flow chart depicting a transaction information keeping method according to yet another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, finnware, or any combination thereof.

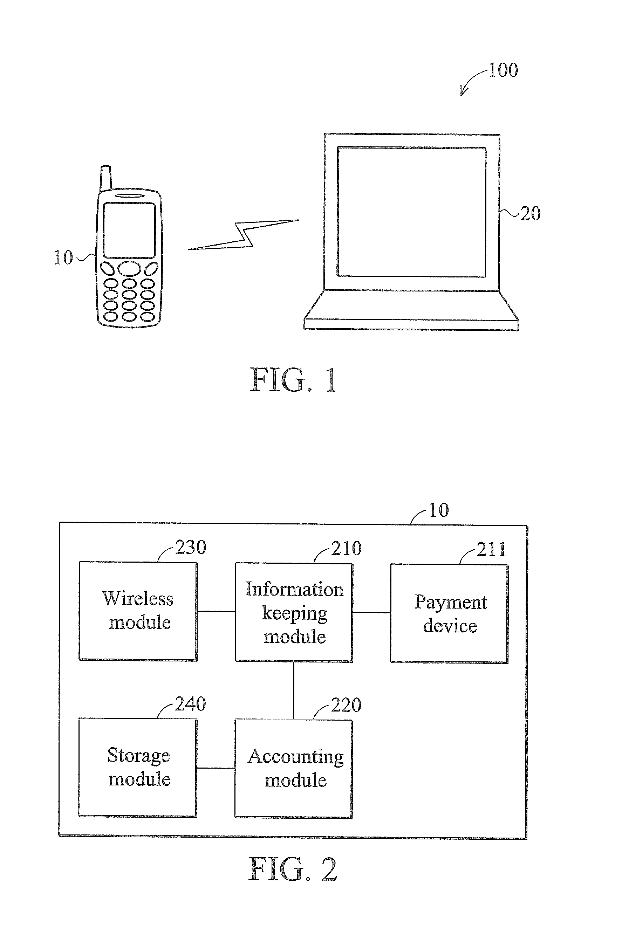

FIG. 1 is a block diagram of a contactless transaction system according to an embodiment of the invention. In the system 100, a payment device (not shown) embedded in, coupled with or carried by a mobile device 10 is employed by a user (payer) (not shown) to perform a transaction with a point of sale terminal 20. The payment device may be, but not limited to, a smart card (such as an EasyCard), a proximity card, a debit card, a credit card, a SIM (subscriber identity module) card, a specific chipset or circuit, or any device capable of performing a transaction with the point of sale terminal 20 wirelessly. Though the mobile device 10 shown in this embodiment is a mobile phone, the mobile device could be a notebook, a tablet, a PDA (personal digital assistant), an e-book, etc. The payment device and the point of sale terminal 20 may both support a short-range wireless communication technology for carrying the transaction information, during the transaction. The short-range wireless communication technology includes, but is not limited to, a Radio Frequency (RF) technology (such as the RF Identification (RFID) technology) or a NFC technology. To perform transaction by the short-range wireless communication technology, the user (payer) (not shown) may simply wave the payment device embedded in, coupled with or carried by the mobile device 10 near the point of sale terminal 20 so that transaction information can be exchanged therebetween. To be more specific, the payment device should be in the communication range of the point of sale terminal 20. For example, the communication range for the NFC technology is about 4 inches.

In an RFID system, an object is applied or incorporated with an identity tag (i.e. an RFID tag) for the purpose of identification and tracking via radio waves. The identity tag may be read from several meters away and even beyond the line of sight of the reader. The identity tag may contain at least two parts. One is an integrated circuit for storing and processing information, modulating and demodulating a radio-frequency (RF) signal, and other specialized functions. The other is an antenna for receiving and transmitting the signal. For an active identity tag, a battery is further included in the unit to enable it to transmit signals autonomously. For a passive identity tag, no battery is required and signal transmission is provoked by external sources, such as the power of the signal transmitted by the reader. When employed in a payment device, such as a smart card or a specific chipset or circuit, the incorporated identity tag is generally a passive identity tag. Taking an EasyCard as an example, the size of the card is as small as a credit card since no battery is required to be incorporated therein. The deposited amount of money may be recorded in the integrated circuit part of the identity tag. When the EasyCard is placed near the fare collection gate, the reader in the fare collection gate initiates communications with the EasyCard and the fare is collected.

Similar to the RFID technology, the NFC technology enables data exchange between devices wirelessly. Two NFC devices communicate via magnetic file induction, where two loop antennas are located within each other's near field, effectively forming an air-core transformer. The communications between the NFC devices are operated within the globally available and unlicensed radio frequency band of 13.56 MHz with a bandwidth of 14 KHz. Generally, there are two modes of communication in NFC technology. In an active communication mode, both initiator and target NFC devices communicate with each other by alternately generating their own field. A NFC device deactivates its RF field while it is waiting for data reception. In this mode, both NFC devices typically need to have a power supply. In a passive communication mode, an initiator NFC device provides a carrier field and the target NFC device answers by modulating existing field. In this mode, the target NFC device may draw its operating power from the electromagnetic field provided by the initiator NFC device. When employing a payment device, the passive communication mode is generally preferred. With regard to the size limit of the payment device, taking smart card for example, the physical shape should comply with the ISO/IEC 7810 standard, which specifies the size of a card to be 85.60x53.98 millimeter, or alternatively, 25x15 millimeter, both in 0.76 millimeter thick.

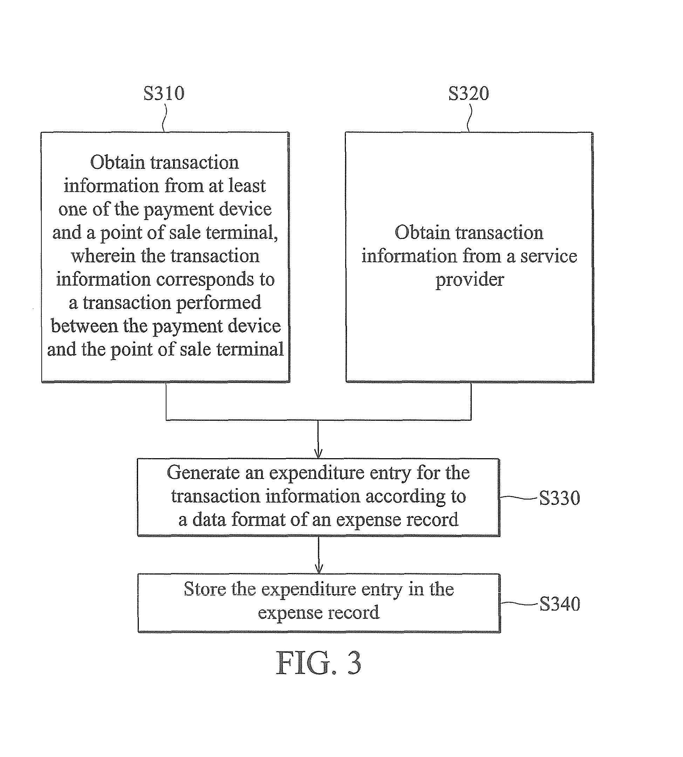

FIG. 2 is a block diagram of a mobile device for keeping transaction information at payer's side according to an embodiment of the invention. FIG. 3 is a flow chart depicting a transaction information keeping method according to an embodiment of the invention. The mobile device 10 includes an information keeping module 210, a payment device 211, an accounting module 220, a wireless module 230, and a storage module 240. Though the payment device 211 is embedded in the mobile device 10, as shown in this embodiment, the payment device 211 may alternatively be coupled with or carried by the mobile device 10. In this embodiment, the information keeping module 210 is coupled to the payment device 211 and the accounting module 220 is coupled to the information keeping module 210. Furthermore, the wireless module 230 is coupled to the information keeping module 210 and the storage module 240 is coupled to the accounting module 220. The payment device 211 may be a contactless integrated circuit device capable of performing contactless payments using a short-range wireless communication technology, such as an RF technology or a NFC technology. For example, the payment device 211 may be a smart card, a proximity card, a debit card, a credit card, a SIM card, a specific chipset or circuit, or others. The description relating to the requirements of the payment device may be referred to the ISO/IEC 7810, 7816 or ISO/IEC 14443 standard, and is omitted in this specification. The wireless module 230 is suitable for providing wireless communication services.

In this embodiment, when a transaction is to be performed, the user (payer) of the payment device 211, may wave the payment device 211 near the point of sale terminal 20 which also employs the same short-range wireless communication technology as the payment device 211. Subsequently, the payment device 211 may receive an initiation signal from the point of sale terminal 20, and performs the transaction with the point of sale terminal 20 using the power from the initiation signal. Furthermore, please refer to FIG. 2 and FIG. 3, the information keeping module 210 may obtain transaction information corresponding to the performed transaction between the payment device 211 and the point of sale terminal 20 from at least one of the payment device 211 and the point of sale terminal 20 (S310). The transaction information may be stored in, for example, the storage module 240 or any other storage the information keeping module 210 can access. The way the information keeping module 210 obtain at least a portion of transaction information from at least one of the payment device 211 and the point of sale terminal 20 depends on the way the information keeping module 210 communicates with the payment device 211 and the point of sale terminal 20. For example, the information keeping module 210 may obtain at least a portion of transaction information from the point of sale terminal 20 via the wireless module 230. In another example, the information keeping module 210 may obtain at least a portion of transaction information from the payment device 211 via wire or the wireless module 230. The transaction information may comprise information concerning, for example, the name of the commodity the user (payer) purchased, the price of the commodity, the purchased quantity of the commodity, the name of the store selling the commodity, the location of the point of sale terminal 20, the time the transaction is performed, and/or any other information the user (payer) may want to know. The accounting module 220 may receive the transaction information from the information keeping module 210 and generates an expenditure entry for the transaction information according to a data format of an expense record (S330). And the accounting module 220 may store the generated expenditure entry in the expense record (S340). The expense record can be maintained in the storage module 240 or any other storage the accounting module 220 can access. In some embodiments, the expense record can be maintained in a remote information center, and the expenditure entry can be stored into the expense record via, for example, the wireless module 230. Thus, the transaction information is kept in the expense record at the payer's side. With this invention, the payer (user) does not have to manually keep the transaction information or expense record. Note that the expense record may comprise expense items for dining, clothing, housing, transportation, grocery, etc., and the data format should not be limited thereto.

In addition, the wireless module 230 provides wireless communications services, so that the information keeping module 210 may use the wireless module 230 to obtain transaction information, such as electronic bills, electronic invoices, electronic receipts, purchase confirmation messages, etc., from a service provider (S320). For example, the electronic bill may be a monthly credit-card E-bill which comprises information of all the transactions done using a credit-card in a specific month, or may be an electricity E-bill, a water E-bill, or a gas E-bill which comprises information of the fee, rate, and others, for the consumed electricity, water, or gas. The electronic invoices and electronic receipts may include information regarding transactions done between the payer and the service provider, including, for example, the name of the commodity/service the user (payer) purchased, the price of the commodity/service, the purchased quantity of the commodity/service, the name of the provider selling the commodity/service, the location of the service provider, the time the transaction is performed, and/or any other information the user (payer) may want to know. The purchase confirmation message may be a message indicating and/or confirming the transaction(s) performed for on-line shopping. The service provider may be a financial institution (such as a bank, or a securities firm), a health insurance company, a water corporation, a power company, an on-line shopping website, a telecommunication company, or any other service provider providing the user (payer) services. In some embodiments, the transaction information may be obtained from the service provider via internet. For example, the service provider may have a web page for the payer (user) to inquire, browse or download transaction information, and then the information keeping module 210 can obtain transaction information from the web page of the service provider with the wireless module 230. The wireless module 230 may be in compliance with a wireless communication protocol specified by the Global System for Mobile communications (GSM) technology, Wideband Code Division Multiple Access (W-CDMA) technology, Code Division Multiple Access-2000 (CDMA-2000) technology, Time Division-Synchronous Code Division Multiple Access (TDSCDMA) technology, Worldwide Interoperability for Microwave Access (WiMAX) technology, Long Term Evolution (LTE) technology, Wi-Fi, Bluetooth, infrared, etc. Upon obtaining the transaction information via the wireless module 230 by the information keeping module 210, the accounting module 220 may generate an expenditure entry for the transaction information according to the data fonnat of the expense record (S330), and stores the expenditure entry in the expense record (S340). For example, the mobile device 10 may generate an expenditure entry for the expenditures in an electronic bill, an electronic receipt, an electronic invoice or for the expenditure in the purchase confirmation message. Note that the transaction information may contain information of one or more expenses, so the accounting module 220 may alternatively generate a plurality of expenditure entries for the multiple expenses. Consequently, the expenses listed in the electronic bill, electronic receipt, electronic invoice or in the purchase confirmation message are also recorded in the expense record, and the user (payer) does not need to manually input the expenditures one-by-one to the expense record anymore. It is noted that, the expense record may be stored in the storage module 240, in a remote information center (not shown) which is accessible via the wireless module 230, or any other storage the accounting module 220 can access.

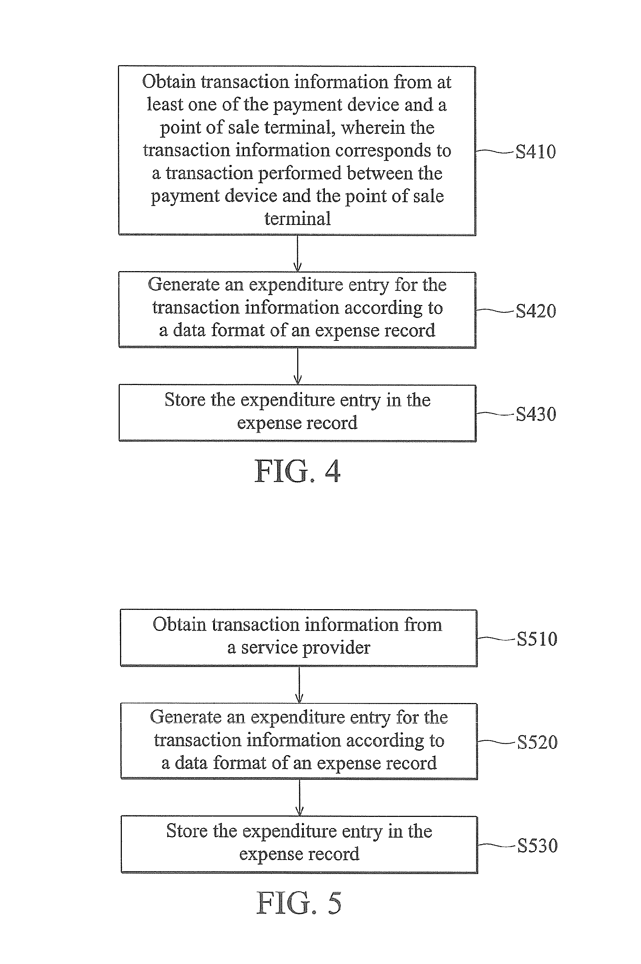

FIG. 4 is a flow chart depicting a transaction information keeping method according to another embodiment of the invention. The transaction information keeping method may be executed in a mobile device coupled with a payment device to keep transaction information at payer's side. Take the mobile device 10 as an example. In step S410, the information keeping module 210 obtains the transaction information from at least one of the payment device 211 and the point of sale terminal 20, wherein the transaction information corresponds to a transaction performed between the payment device 211 and the point of sale terminal 20. Regarding the operation of transaction performed between the payment device 211 and the point of sale terminal 20, reference may be made to the detailed description with reference to FIGs. 1 and 2. The transaction information may be stored in, for example, the storage module 240 or any other storage the information keeping module 210 can access. In step S420, the accounting module 220 generates an expenditure entry for the transaction information according to a data format of an expense record. Then, in step S430, the generated expenditure entry is stored in the expense record. Note that the expense record may be stored in the storage module 240, in a remote information center (not shown) which is accessible via the wireless module 230, or any other storage the accounting module 220 can access.

FIG. 5 is a flow chart depicting a transaction information keeping method according to yet another embodiment of the invention. Similar to FIG. 4, the transaction information keeping method may also be executed in a mobile device coupled with a payment device to keep transaction information at payer's side. Take the mobile device 10 as an example. In step S510, the information keeping module 210 obtains transaction information, such as an electronic bill, an electronic invoice, an electronic receipt, or a purchase confirmation message, from a service provider by a wireless module 230. The wireless module 230 may provide wireless communication services for the mobile device 10 to obtain transaction information from the service provider via internet. In step S520, upon obtaining the transaction information, the accounting module 220 may generate an expenditure entry for the transaction information according to a data format of an expense record. For example, an expenditure entry can be generated for the expenditures in an electronic bill, an electronic invoice, an electronic receipt, or for the expenditure in the purchase confirmation message. Then in step S530, the generated expenditure entry is stored in the expense record. Note that the expense record may be stored in the storage module 240, in a remote information center (not shown) which is accessible via the wireless module 230, or any other storage the accounting module 220 can access.
In summary there is disclosed a mobile device for keeping transaction information at payer's side is provided with an information keeping module therein. The information keeping module is suitable for obtaining first transaction information from at least one of a payment device and a point of sale terminal. Particularly, the first transaction information corresponds to a transaction performed between the payment device and the point of sale terminal.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A mobile device for keeping transaction information at payer's side, comprising:
an information keeping module, suitable for obtaining first transaction information from at least one of a payment device and a point of sale terminal, wherein the first transaction information corresponds to a transaction performed between the payment device and the point of sale terminal.

2. The mobile device of claim 1, further comprising a wireless module for providing wireless communication services, wherein the first transaction information is obtained from the point of sale terminal via the wireless module.

3. The mobile device of claim 1, further comprising an accounting module, coupled to the information keeping module, for generating a first expenditure entry for the first transaction information according to a data format of an expense record.

4. The mobile device of claim 3, further comprising a wireless module for providing wireless communication services, wherein the expense record is maintained in a remote information center, and the first expenditure entry is stored into the expense record via the wireless module.

5. The mobile device of claim 3, wherein the information keeping module is further suitable for obtaining second transaction information from a service provider via a wireless module.

6. The mobile device of claim 5, wherein the accounting module further generates a second expenditure entry for the second transaction information according to the data fonnat of the expense record.

7. The mobile device of claim 1, wherein the transaction between the payment device and the point of sale terminal is performed using a Near Field Communication (NFC) technology or a Radio Frequency (RF) technology.

8. A mobile device for keeping transaction information at payer's side, comprising:
an information keeping module, suitable for obtaining first transaction information from a service provider via a wireless module; and
an accounting module, coupled to the information keeping module, for generating a first expenditure entry for the first transaction information according to a data format of an expense record.

9. The mobile device of claim 8, wherein the expense record is maintained in a remote information center, and the first expenditure entry is stored into the expense record via the wireless module.

10. The mobile device of claim 8, wherein the information keeping module is further suitable for obtaining second transaction information from at least one of a payment device and a point of sale terminal, wherein the second transaction information corresponds to a transaction performed between the payment device and the point of sale terminal.

11. The mobile device of claim 10, further comprising a storage module for storing the expense record, wherein the accounting module further generates a second expenditure entry for the second transaction information according to the data format of the expense record.

12. A transaction information keeping method for a mobile device coupled with a payment device to keep transaction information at payer's side, comprising:
obtaining first transaction information from at least one of the payment device and a point of sale terminal, wherein the first transaction information corresponds to a transaction performed between the payment device and the point of sale terminal; and
storing the first transaction information.

13. The transaction information keeping method of claim 12, further comprising:
generating a first expenditure entry for the first transaction information according to a data format of an expense record; and
storing the first expenditure entry in the expense record.

14. The transaction information keeping method of claim 13, wherein the mobile device comprises a wireless module for providing wireless communication services, the expense record is maintained in a remote information center, and the first expenditure entry is stored in the expense record via the wireless module.

15. The transaction information keeping method of claim 13, further comprising obtaining second transaction information from a service provider via a wireless module, generating a second expenditure entry for the second transaction information according to the data format of the expense record, and storing the second expenditure entry in the expense record.
